# EUROPÄISCHE PATENTSCHRIFT

(11) **EP 3 074 269 B1**
(45) Veröffentlichungstag und Bekanntmachung des Hinweises auf die Patenterteilung: **13.03.2019**
(21) Anmeldenummer: 14752318.7
(22) Anmeldetag: 14.08.2014
(51) Int. Cl.: B60N 2/015, B60N 2/30

(54) **SITZANORDNUNG FÜR EIN FAHRZEUG**
SEAT SYSTEM FOR A VEHICLE
AGENCEMENT D'ASSISE POUR VÉHICULE

(30) Priorität: 29.11.2013 DE 102013224605
(43) Veröffentlichungstag der Anmeldung: 05.10.2016
(73) Patentinhaber: Adient Luxembourg Holding S.à r.l., 1855 Luxembourg (LU)
(72) Erfinder: SIMEONIDIS, Antonios, 42287 Wuppertal (DE); KRIZIC, Ivan, 51469 Bergisch Gladbach (DE)
(74) Vertreter: Finger, Catrin
(86) Internationale Anmeldenummer: PCT/EP2014/067434
(87) Internationale Veröffentlichungsnummer: WO 2015/078599

(56) Entgegenhaltungen:
- WO-A2-2008/029952
- DE-A1-102007 044 096
- DE-C1- 19 735 253
- US-A- 5 662 369
- US-A- 5 743 593
- US-A1- 2012 228 910

## Beschreibung

Die Erfindung betrifft eine Sitzanordnung für ein Fahrzeug, umfassend mindestens zwei nebeneinander angeordnete Sitze.

Aus dem Stand der Technik sind Sitzanordnungen für Fahrzeuge bekannt, welche mehrere nebeneinander angeordnete Sitze umfassen, von denen zumindest einer oder mehrere mittels Fernauslösung entriegelbar sind.

Aus der DE 197 35 253 C1 ist eine geteilte Hintersitzlehne bekannt, bei welcher beide Lehnenbereiche derart gekoppelt sind, dass diese nur zusammen herunterklappbar sind. Aus der US 5,662,369 A und WO 2008/029952 A2 sind jeweils einzelne Sitze bekannt, bei welchen die einzelne Lehne bzw. ein einzelnes Sitzteil federgedämpft schwenkbar ist.

Eine weitere Sitzanordnung mit mehreren Sitzbereichen und einer gemeinsamen Drehachse von zwei benachbarten Lehnen ist zum Beispiel aus der US 2012/0228910 A1 bekannt.

Aufgabe der vorliegenden Erfindung ist es, eine besonders sichere Sitzanordnung für ein Fahrzeug mit Fernauslösung zur Entriegelung einzelner Sitze der Sitzanordnung anzugeben.

Die Aufgabe wird erfindungsgemäß gelöst mit einer Sitzanordnung für ein Fahrzeug mit den Merkmalen des Anspruchs 1, die mehrere nebeneinander angeordnete Sitze umfasst, wobei zumindest einer der Sitze derart eingerichtet ist, dass bei Entriegelung und bei einem Schwenken dieses Sitzes, insbesondere dessen Sitzlehne, über einen vorgegebenen Neigungswinkel hinaus ein benachbarter Sitz im entriegelten Zustand gesperrt ist oder zumindest ein Klappen dessen Sitzlehne gedämpft oder gesperrt wird.

Mittels der Erfindung ist sichergestellt, dass bei einer bereits abgeklappten Sitzlehne einer der Sitze bei einer Betätigung der Entriegelung, insbesondere der Fernentriegelung, eines zu diesem Sitz benachbarten anderen Sitzes dieser benachbarte Sitz nicht automatisch abgeklappt oder dessen Sitzlehne geneigt werden kann. Hierzu ist der benachbarte und noch nicht abgeklappte Sitz bei bereits geklappten benachbarten Sitz gegen diesen angefedert. Hierdurch ist insbesondere die Sicherheit bei einem Betätigen einer Fernentriegelung für den noch nicht geklappten benachbarten Sitz erhöht und eine Verletzungsgefahr durch eine ungewünschte automatische Neigung des entriegelten benachbarten Sitzes zumindest reduziert oder gar vermieden.

In einer Weiterbildung der Erfindung umfasst die Sitzanordnung mehrere nebeneinander angeordnete Sitze unterschiedlicher Breite, wobei derjenige Sitz mit einer geringeren Breite derart eingerichtet ist, dass bei Entriegelung und bei einem Schwenken dieses Sitzes, insbesondere dessen Sitzlehne über einen vorgegebenen Neigungswinkel hinaus ein benachbarter Sitz mit größerer Breite im entriegelten Zustand gesperrt ist oder zumindest ein Klappen dessen Sitzlehne gedämpft wird.

Die Erfindung sieht vor, dass ein zuerst zu schwenkender Sitz derart eingerichtet ist, dass bei dessen Schwenken eine zwischen dem schwenkenden Sitz und dem benachbarten Sitz wirkende Reibungskraft erhöht wird, insbesondere mit zunehmender Rotation oder Schwenken des zu schwenkenden Sitzes erhöht wird. Hierzu ist im Bereich der Schwenkachse des zuerst zu schwenkenden Sitzes, insbesondere des Sitzes mit einer geringeren Breite, eine Feder- und/oder Dämpfungseinrichtung, insbesondere eine Umschlingungsfeder, angeordnet.

Die Sitzanordnung umfasst mehrere nebeneinander angeordnete Sitze, von denen zumindest zwei um eine gemeinsame Schwenkachse schwenkbar sind. Dabei sind die nebeneinander angeordneten Sitze im Bereich der gemeinsamen Schwenkachse mittels einer Welle oder einem Übertragungselement verbunden, wobei einer der beiden Sitze drehbar auf der Welle angeordnet ist und der andere Sitz drehfest auf der Welle angeordnet ist.

Dabei ist insbesondere der eine geringere Breite aufweisende Sitz der zumindest beiden schwenkbaren Sitze drehbar auf der Welle angeordnet und derart eingerichtet, dass bei Entriegelung und bei einem Schwenken dessen Sitzlehne über einen vorgegebenen Neigungswinkel hinaus der benachbarte andere Sitz mit einer größeren Breite im entriegelten Zustand gesperrt ist oder zumindest ein Klappen dessen Sitzlehne gedämpft oder gesperrt wird.

Hierzu ist der benachbarte andere und noch nicht abgeklappte Sitz mit einer Sitzlehne in Sitz- oder Designposition gegen den geschwenkten Sitz mit bereits abgeklappter Sitzlehne angefedert.

Die Erfindung sieht vor, dass im Bereich der gemeinsamen Schwenkachse des zu schwenkenden Sitzes eine Feder- und/oder Dämpfungseinrichtung angeordnet ist. Beispielsweise umfasst die Feder-und/oder Dämpfungseinrichtung als Federelement zumindest eine Umschlingungsfeder oder eine Schraubendrehfeder. Einerseits ist das Federelement drehfest am Sitzteil und andererseits ist das Federelement an der Sitzlehne abgestützt. Bei einer Schwenkbewegung der Sitzlehne wird das an der Sitzlehne abgestützte Ende mitgenommen, wodurch sich das Federelement spannt, insbesondere zusammenzieht.

Durch Anordnung des Federelements im Bereich der gemeinsamen Schwenkachse, insbesondere auf der beide Sitze koppelnden Welle, kommt es beim Schwenken der Sitzlehne des ersten zu klappenden und drehbar auf der Welle angeordneten Sitzes, insbesondere des schmaleren Sitzes, dazu, dass sich das spannende Federelement an die Welle anlegt und um diese stärker gewunden und zusammengezogen wird. Hierdurch wird beim nachfolgenden Klappen oder Schwenken der Sitzlehne des benachbarten anderen Sitzes, der drehfest auf der Welle angeordnet ist, die Welle gedreht. Durch Drehen der Welle wirkt in dem an der Welle anliegenden und durch Klappen der Sitzlehne des ersten Sitzes vorgespannten Federelement eine Reibungskraft der Schwenkbewegung des benachbarten anderen Sitzes entgegen, die mit zunehmender Schwenkbewegung dieses benachbarten anderen Sitzes erhöht wird, so dass das Abklappen der Sitzlehne des benachbarten anderen Sitzes gedämpft oder gar vermieden werden kann. Hierdurch ist bei bereits geklapptem, insbesondere mittlerem oder schmalerem, Sitz bei einer Fernentriegelung des benachbarten anderen Sitzes ein gedämpftes und langsames Abklappen oder ein Verriegeln der Sitzlehne ermöglicht, so dass eine Verletzungsgefahr reduziert bzw. vermieden ist.

Zusätzlich kann die Feder- und/oder Dämpfungseinrichtung als Dämpfungselement zumindest eine Führungshülse oder Reibklemme zur weiteren Erhöhung und Einstellung der Reibungskraft umfassen, die bei bereits abgeklappter Sitzlehne des einen Sitzes beim Abklappen der Sitzlehne des benachbarten Sitzes dieser Abklappbewegung entgegen wirkt. Die Führungshülse oder Reibklemme umgibt dabei zumindest teilweise oder vollständig die Welle im Bereich der Schwenkachse.

Je nach einzustellender Reibungskraft, insbesondere in Abhängigkeit von den Eigenschaften der Sitzlehne, wie Größe, Gewicht, Abmessungen, sind bzw. ist das Federelement und/oder die Führungshülse und/oder die Reibklemme entsprechend ausgelegt. In einer möglichen Ausführungsform umgibt, insbesondere umschlingt, das Federelement die Führungshülse bzw. Reibklemme über die gesamte Längsausdehnung. In diesem Ausführungsbeispiel ist das eine Federende an einer Sitzseite und das gegenüberliegende Federende an der anderen gegenüberliegenden Sitzseite gehalten, wobei ein Federende sitzteilfest und das andere lehnenfest ausgebildet ist.

Alternativ kann das Federelement nur einen Wellenendbereich und eine auf diesem Wellenendbereich angeordnete Führungshülse oder Reibklemme umgeben, insbesondere umschlingen. In diesem Ausführungsbeispiel sind beide Federenden im Bereich einer Sitzseite gehalten, wobei ein Federende sitzteilfest, beispielsweise an einem Flansch oder Beschlagunterteil, gehalten ist. Das andere lehnenseitige Federende ist beispielsweise an einem von der gemeinsamen Welle abragenden und somit wellenfesten Mitnahmepin und/oder an einem von der Sitzlehne abragenden und somit lehnenfesten Mitnahmepin gehalten. Bei einer Schwenkbewegung der Sitzlehne des drehbar auf der gemeinsamen Welle angeordneten Sitzes wird das lehnenseitige Federende vom lehnenfesten Mitnahmepin mitgenommen und vorgespannt. Bei einer Schwenkbewegung der wellenfesten Sitzlehne, die drehfest auf der gemeinsamen Welle angeordnet ist, und somit beim Drehen der Welle wird das lehnenseitige Federende gegebenenfalls nach einem Leerweg vom wellenfesten Mitnahmepin mitgenommen, so dass sich das bereits vorgespannte Federelement weiter spannt und die Führungshülse oder die Reibklemme an die Welle weiter anlegt.

Hierdurch berühren sich die Führungshülse (oder die Reibklemme) und die Welle und bewegen sich bei der Schwenkbewegung der wellenfesten Sitzlehne relativ zueinander, wodurch eine Reibungskraft durch Bewegungsreibung, insbesondere Gleitreibung, entsteht, die der Schwenkbewegung der wellenfesten Sitzlehne entgegen wirkt und mit zunehmender Schwenkbewegung erhöht wird.

In einer weiteren Ausführungsform ist die Führungshülse oder die Reibklemme in Längsausdehnung geschlitzt. Hierdurch ist gezielt die der Schwenkbewegung entgegen wirkende Reibungskraft einstellbar und vorgebbar.

Die mit der Erfindung erzielten Vorteile bestehen insbesondere darin, dass bei einer bereits geklappten Sitzlehne eines der auf einer gemeinsamen Drehwelle angeordneten Sitze bei einer Fernentriegelung einer noch nicht geklappten Sitzlehne des benachbarten anderen Sitzes dessen Sitzlehne nicht automatisch und unkontrolliert abgeklappt oder geneigt werden kann. Somit ist ein Verletzungsrisiko durch unkontrolliertes Abklappen einer fernentriegelten Sitzlehne zumindest reduziert oder gar vermieden.

Anhand der beigefügten schematischen Figuren werden nachfolgend Ausführungsbeispiele der Erfindung näher beschrieben. Dabei zeigen:
- Fig. 1: schematisch in perspektivischer Ansicht einen Teil einer Sitzanordnung,
- Fig. 2A, 2B: schematisch in perspektivischer Ansicht verschiedene Ausführungsformen einer eine Wellenlagerung umschlingenden Feder- und/oder Dämpfungseinrichtung,
- Fig. 3: schematisch in vergrößerter Darstellung eine alternative Ausführungsform für eine Feder- und/oder Dämpfungseinrichtung in einer Ausgangsstellung bei senkrechten Sitzlehnen,
- Fig. 4: schematisch in perspektivischer Darstellung eine Sitzanordnung mit einer abgeklappten Sitzlehne einer der Sitze,
- Fig. 5: schematisch in vergrößerter Darstellung den Zustand der Feder- und/oder Dämpfungseinrichtung bei abgeklappter Sitzlehne des zugehörigen Sitzes,
- Fig. 6: schematisch in perspektivischer Darstellung eine Sitzanordnung mit abgeklappten Sitzlehnen zweier benachbarter Sitze, und
- Fig. 7: schematisch in vergrößerter Darstellung den Zustand der Feder- und/oder Dämpfungseinrichtung bei zwei abgeklappten Sitzlehnen zweier benachbarter Sitze.

Einander entsprechende Teile sind in allen Figuren mit den gleichen Bezugszeichen versehen.

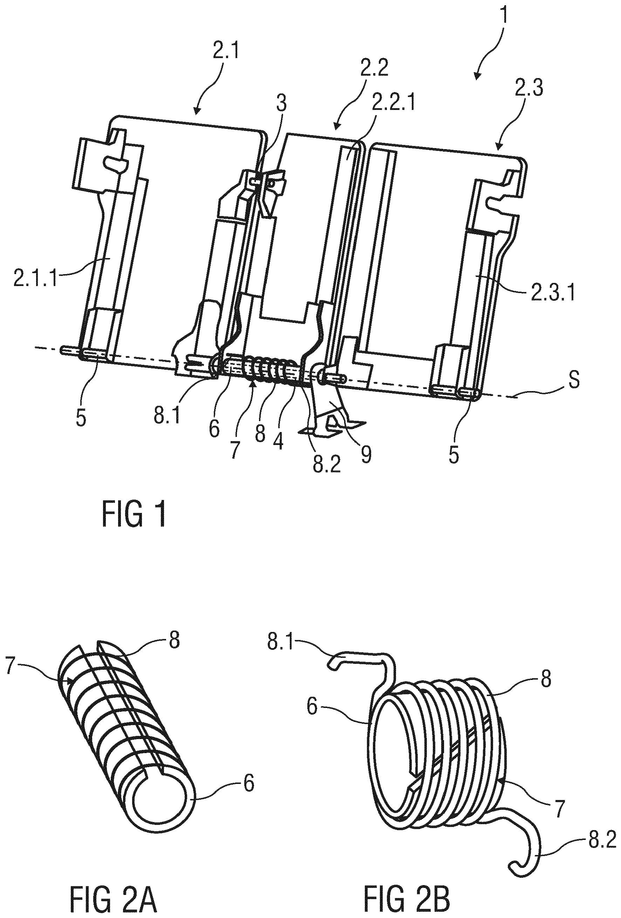

Figur 1 zeigt in einer perspektivischen Ansicht einen Teil einer Sitzanordnung 1 für ein Fahrzeug. Bei dem Fahrzeug kann es sich um ein Personenkraftfahrzeug oder ein anderes Fahrzeug handeln, welche mehrere nebeneinander angeordnete Sitze 2.1 bis 2.3 umfassen, wobei diese eine Sitzreihe bilden. Sind mehrere Sitzreihen, zum Beispiel eine vordere Sitzreihe für einen Fahrer und Beifahrer und eine oder mehrere Sitzreihe/n von Rücksitzen für Mitfahrer, im Fahrzeug, zum Beispiel in einem Van oder SUV-Fahrzeug (spart utility-type vehicle) vorgesehen, so kann zumindest einer der Sitze 2.1 bis 2.3 vorübergehend so positioniert oder bewegt werden, dass entweder mehr Stauraum im Fahrzeuginnenraum zur Verfügung steht oder ein Mitfahrer besser ein- oder aussteigen kann.

Die Sitzanordnung 1 umfasst mehrere nebeneinander angeordnete Sitze 2.1 bis 2.3, von denen jeweils zugehörige Sitzlehnenträger 2.1.1 bis 2.3.1 dargestellt sind. Zugehörige Sitzkissen- oder Sitzflächenträger, zu welchen die Sitzlehnenträger 2.1.1 bis 2.3.1 um eine Schwenkachse S relativ schwenkbar, insbesondere klappbar sind, sind nicht näher dargestellt. In nicht näher dargestellter Art und Weise sind die Sitzlehnenträger 2.1.1 bis 2.3.1 und die Sitzflächenträger gepolstert ausgeführt.

Je nach Ausführungsform können die Sitzlehnenträger 2.1.1 bis 2.3.1 in eine Verstauposition nach vorn geschwenkt werden, so dass die Sitzlehne vollständig nach vorne in eine im Allgemeinen horizontale Position geklappt ist, in welcher sie auf der Sitzfläche aufliegt. Dabei können die Sitzlehnen gemeinsam oder separat geschwenkt werden. In der Gebrauchs- oder Sitzposition der Sitze 2.1 bis 2.3 sind deren Sitzlehnenträger 2.1.1 bis 2.3.1, wie dargestellt, in einer im Wesentlichen senkrechten/aufrechten oder leicht geneigten Position gestellt und miteinander beispielsweise mittels eines lösbaren Verriegelungselements 3, beispielsweise eines Riegels, miteinander verbunden.

Je nach Ausführungsform des Fahrzeugs können die Sitze 2.1 bis 2.3 einer Sitzreihe und somit benachbarte Sitze 2.1 bis 2.3 gleiche Breiten oder unterschiedliche Breiten aufweisen.

Im Ausführungsbeispiel nach Figur 1 weist der mittlere Sitz 2.2 eine geringere Breite als die seitlich benachbarten Sitze 2.1 und 2.3 auf. Auf die Sitzreihe bezogen weist der mittlere Sitz 2.2 eine geringere Breite von beispielsweise 20% gegenüber den benachbarten Sitzen 2.1, 2.3 mit jeweils einer größeren Breite von beispielsweise 40% auf (bezogen auf eine Sitzreihe mit einer 100%igen Sitzanordnung).

Zum Schwenken der einzelnen Sitzlehnenträger 2.1.1 bis 2.3.1 relativ zur jeweiligen Sitzfläche zwischen einer Sitzposition und einer Verstau- oder Ladeposition ist im Bereich der Schwenkachse S mindestens eine Welle 4 angeordnet. Die Welle 4 ist mittels eines Lagers in seitlichen Lagerbuchsen der Sitzfläche/n gelagert.

Im Ausführungsbeispiel nach Figur 1 erstreckt sich die Welle 4 über die gesamte Breite des Sitzes 2.2 und über die Lagerung des betreffenden Sitzes 2.2 hinaus in die Lagerung des benachbarten Sitzes 2.1 bzw. 2.3 an der betreffenden Sitzseite. Im Ausführungsbeispiel nach Figur 1 sind die Sitzlehnenträger 2.1.1 und 2.2.1 gemeinsam auf der Welle 4 (auch Schwenkwelle genannt) angeordnet, wobei zumindest der mittlere Sitz 2.2 drehbar auf der Welle 4 und zumindest einer oder beide benachbarte Sitze 2.1 und 2.3 drehfest auf der Welle 4 angeordnet sind.

Alternativ oder zusätzlich können die Sitzlehnenträger 2.1.1 bis 2.3.1 mittels separater Drehbolzen 5 schwenkbar an der jeweiligen Sitzfläche angeordnet sein.

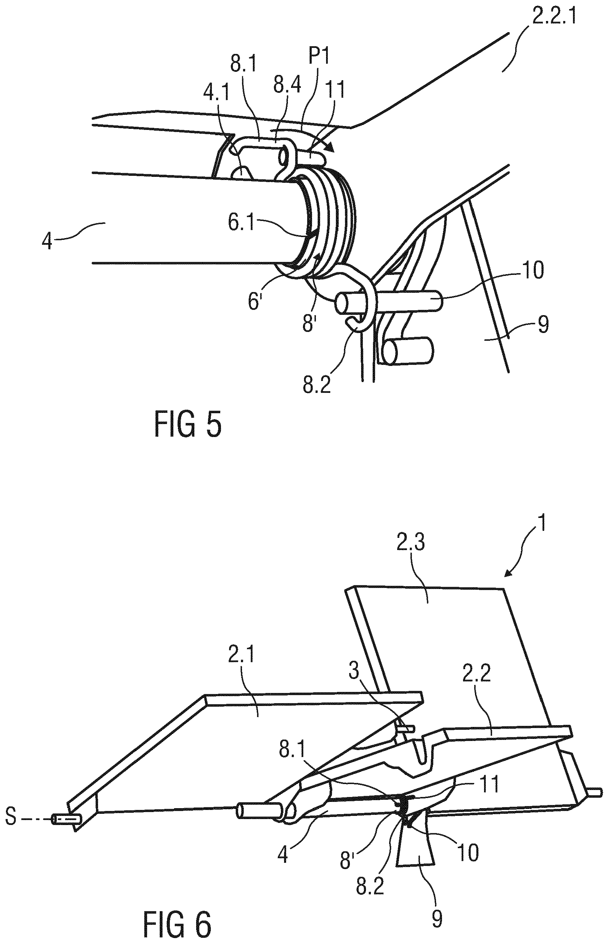

Die Welle 4 kann dabei von einer Lager- oder Führungshülse 6 umgeben sein. Die Führungshülse 6 ist insbesondere aus Kunststoff gefertigt. Alternativ kann es sich um ein Bauteil, insbesondere eine Verbindungsstange oder ein -rohr handeln. Im Ausführungsbeispiel nach Figur 6 erstreckt sich die Führungshülse 6 im Wesentlichen über die gesamte Länge der gemeinsamen Welle 4 zwischen deren seitlichen Lagerungen am Sitz 2.2 im unteren Bereich des betreffenden Sitzlehnenträgers 2.2.1.

Um einzelne Sitze 2.1 bis 2.3 in eine Verstauposition nach vorne zu schwenken, weisen die Sitze 2.1 bis 2.3 in nicht näher dargestellter Art und Weise einen verriegelbaren Schwenkmechanismus auf, der mittels einer Fernauslösung entriegel-/lösbar ist, wobei im Allgemeinen jeder Sitz 2.1 bis 2.3 einen separaten verriegelbaren Schwenkmechanismus aufweist, der separat lösbar ist.

Die Erfindung sieht vor, dass im Falle der Entriegelung des Schwenkmechanismus einer der Sitze 2.1 bis 2.3, im Ausführungsbeispiel des mittleren Sitzes 2.2, dessen Sitzlehne infolgedessen automatisch oder manuell nach vorne schwenkbar ist. Dabei ist der Sitz 2.2 derart eingerichtet, dass bei Entriegelung und bei einem Schwenken dieses Sitzes 2.2 über einen vorgegebenen Neigungswinkel hinaus ein benachbarter Sitz 2.1 oder 2.3, im Ausführungsbeispiel der benachbarte Sitz 2.1, im entriegelten Zustand gesperrt wird, insbesondere ein Schwenken dessen Sitzlehne zumindest behindert, insbesondere gedämpft, oder gar verhindert wird.

Hierdurch wird bei bereits abgeklappten mittleren Sitz 2.2 und bei einer Betätigung der Entriegelung, insbesondere einer Fernentriegelung des benachbarten Sitzes 2.1 dieser benachbarte Sitz 2.1 nicht automatisch abgeklappt oder geneigt oder eine automatische Neigung der Sitzlehne zumindest begrenzt oder gedämpft. Somit ist insbesondere die Sicherheit bei einem Betätigen der Fernentriegelung erhöht und eine Verletzungsgefahr durch eine ungewünschte automatische Neigung oder ein Klappen der Sitzlehne des entriegelten benachbarten Sitzes 2.1 zumindest reduziert oder gedämpft oder gar vermieden.

Zur Erzielung einer solchen Sperrung bzw. Dämpfung einer nachfolgenden Neigung der Sitzlehne des benachbarten Sitzes 2.1 bei bereits geschwenktem Sitz 2.2 umfasst dieser mittlere Sitz 2.2 eine Feder- und/oder Dämpfungseinrichtung 7. Die Feder- und/oder Dämpfungseinrichtung 7 umfasst zumindest ein Federelement 8. Das Federelement 8 ist als eine Umschlingungsfeder, insbesondere eine Schraubendrehfeder ausgebildet. Die Feder- und/oder Dämpfungseinrichtung 7 ist insbesondere aus Metall gefertigt.

Die Feder- und/oder Dämpfungseinrichtung 7 umfasst zusätzlich die Führungshülse 6. Das Federelement 8 umgibt oder umschlingt dabei die Welle 4, insbesondere deren Führungshülse 6, oder eine andere Verbindungsstange. Dabei können das Federelement 8 und die Führungshülse 6 aus Metall gebildet sein. Alternativ kann die Führungshülse 6 aus Kunststoff gebildet sein.

Bei Erstreckung des Federelements 8 im Wesentlichen über die gesamte Längsausdehnung der gemeinsamen Welle 4 zwischen den seitlichen Lagerungen dieser am Sitz 2.2 ist ein Federende 8.1 lehnenfest an einem unteren Seitenbereich des zugehörigen Sitzlehnenträgers 2.2.1 und das andere Federende 8.2 auf der gegenüberliegenden Sitzseite des Sitzes 2.2 sitzteilfest an einem Bodenflansch 9 oder einem bodenfesten Beschlagunterteil angeordnet.

Figuren 2A und 2B zeigen verschiedene Ausführungsbeispiele für eine die Führungshülse 6 umschlingende Feder- und/oder Dämpfungseinrichtung 7 mit einem als Umschlingungsfeder ausgebildeten Federelement 8. Dabei kann anstelle einer Führungshülse 6 der Welle 4 eine Reibklemme, insbesondere eine geschlitzte Federklemme mit niedriger elastischer Festigkeit verwendet werden, die die Schwenkbewegung der wellenfesten Lehne des benachbarten Sitzes 2.1 durch Reibkräfte dämpft. Dabei wird mit fortwährender Schwenkbewegung der Lehne des Sitzes 2.1 das Federelement 8 weiter gespannt und somit die Führungshülse 6 oder die Reibklemme weiter gegen die Welle 4 gedrückt und die Reibungskraft entsprechend weiter erhöht und eingestellt.

Die Führungshülse 6 ist zur Einstellung der erzielbaren einer Schwenkbewegung entgegen wirkenden Reibungskraft geschlitzt ausgeführt. Dabei kann ein Schlitz 6.1 entlang der Längsausdehnung der Führungshülse gerade (= Figur 2A) oder schräg (= Figur 2B) verlaufen.

Die Feder- und/oder Dämpfungseinrichtung 7, zumindest umfassend die Führungshülse 6 und/oder das Federelement 8, dämpft und/oder sperrt dabei die Bewegung der Sitzlehne des benachbarten Sitzes 2.1 von der aufrecht stehenden Position in die Verstauposition, wenn der mittlere Sitz 2.2, insbesondere dessen Sitzlehne bereits von der aufrecht stehenden Position in eine über einen vorgegebenen Neigungswinkel nach vorne hinaus geneigte Position, insbesondere in eine Verstauposition, geklappt ist.

Hierzu ist der zuerst zu schwenkende Sitz 2.2 derart eingerichtet, dass bei dessen Schwenken eine zwischen dem schwenkenden Sitz 2.2 und dem benachbarten Sitz 2.1 wirkende Reibungskraft erhöht wird, insbesondere mit zunehmender Rotation oder Schwenken des zu schwenkenden Sitzes 2.2 erhöht wird. Hierzu ist die Feder- und/oder Dämpfungseinrichtung 7 mit dem Federelement 8, insbesondere einer Umschlingungsfeder, im Bereich der Schwenkachse S des zu schwenkenden Sitzes 2.2 angeordnet, wobei das Federelement 8 der Feder- und/oder Dämpfungseinrichtung 7 die Führungshülse 6 oder Reibklemme umschlingt.

In der Normal- oder Sitzposition der Sitzlehne des Sitzes 2.2 ist die Feder-und/oder Dämpfungseinrichtung 7, insbesondere das Federelement 8, entspannt. Dabei ist ein Ende (= Federende 8.1) der Feder- und/oder Dämpfungseinrichtung 7 lehnenseitig oder hülsenseitig befestigt. Dieses Ende der Feder- und/oder Dämpfungseinrichtung 7 dreht sich mit einem Schwenken der Sitzlehne zumindest einer der oder beider Sitze 2.1 und 2.2 mit. Das andere, insbesondere gegenüber liegende Ende (= Federende 8.2) der Feder- und/oder Dämpfungseinrichtung 7 ist sitzflächenseitig oder fahrzeugseitig, insbesondere bodenseitig, oder an einem der benachbarten Sitze 2.1 oder 2.3 befestigt und somit drehfest.

Wird nach Entriegelung des Sitzes 2.2 dessen Sitzlehne nach vorne geschwenkt, so zieht sich die Feder- und/oder Dämpfungseinrichtung 7, insbesondere das Federelement 8, zusammen. Vorzugsweise zieht sich die Feder- und/oder Dämpfungseinrichtung 7, insbesondere das Federelement 8, ab einer Neigung der Sitzlehne gegenüber der Sitzfläche des Sitzes 2.2 von größer 20 % gegenüber der Normal- oder Sitzposition zusammen, wobei die auf die Führungshülse 6, insbesondere zwischen der Führungshülse 6 und der gemeinsamen Welle 4, wirkende Reibungskraft mit zunehmender Schwenkung oder Neigung der Sitzlehne des Sitzes 2.2 weiter zunimmt und der Schwenkbewegung entgegen wirkt.

Alternativ kann sich die Feder- und/oder Dämpfungseinrichtung 7 bereits ab einer Neigungsverstellung aus der Normal- oder Sitzposition heraus zusammenziehen.

Aufgrund der Erstreckung der gemeinsamen Welle 4 und der Führungshülse 6 oder der Verbindungsstange über den mittleren Sitz 2.2 hinaus in die Lagerung des benachbarten Sitz 2.1 kann bei einem bereits geneigten mittleren Sitz 2.2 und somit teilweiser oder vollständig gespannter oder zusammengezogener Feder- und/oder Dämpfungseinrichtung 7 der benachbarte Sitz 2.1, insbesondere dessen Sitzlehne, aufgrund der auf die Welle 4 und die Führungshülse 6 wirkenden Reibungskraft nicht geschwenkt (bei vollständig gespanntem Federelement 8) oder nur stark gedämpft geschwenkt werden. Somit ist sichergestellt, dass bei bereits geschwenktem mittlerem Sitz 2.2 und bei einer nachfolgenden Entriegelung, insbesondere Fernentriegelung des benachbarten Sitzes 2.1 dessen Sitzlehne nicht automatisch nach vorne geschwenkt wird oder zumindest eine Schwenkung der Sitzlehne stark gedämpft wird, wodurch die Sicherheit erhöht ist.

In einer alternativen Ausführungsform kann die Feder- und/oder Dämpfungseinrichtung 7, insbesondere das Federelement 8 und/oder die Führungshülse 6, derart angeordnet und eingerichtet sein, dass diese nach erfolgtem Schwenken des mittleren Sitzes 2.2 in die Verstauposition und nach anschließender Entriegelung des benachbarten Sitzes 2.1 durch ein Schwenken der Sitzlehne des Sitzes 2.1 weiter gespannt und zusammengezogen wird, so dass das Schwenken der Sitzlehne des Sitzes 2.1 weiter gedämpft und gegebenenfalls ab einem vorgegebenen Neigungswinkel, beispielsweise bei Erreichen einer Neigung der Sitzlehne von 40° oder 60°, gesperrt wird. Hierzu ist das eine lehnenseitige Ende (= Federende 8.1) der Feder- und/oder Dämpfungseinrichtung 7 an der Sitzlehne des Sitzes 2.2 oder an der gemeinsamen Welle 4 oder an der gemeinsam drehbaren Führungshülse 6 angelehnt.

Wird hingegen die Fernentriegelung des äußeren Sitzes 2.1 betätigt, wenn der mittlere Sitz 2.2, insbesondere dessen Sitzlehne in der Gebrauchsposition/Sitzposition steht und somit die Feder- und/oder Dämpfungseinrichtung 7 entspannt ist, kann die Sitzlehne des äußeren Sitzes 2.1 automatisch oder manuell aus der Gebrauchs-/Sitzposition in eine nach vorne geneigte Position, insbesondere eine Verstauposition geschwenkt werden. Dabei ist die Feder- und/oder Dämpfungseinrichtung 7 im Moment der Fernentriegelung entspannt, so dass erst nach beginnendem Schwenken des Sitzlehnenträgers 2.1.1 eine leichte Dämpfung der Schwenkbewegung durch Spannen des noch ungespannten Federelements 8 und durch anschließendes Berühren von zunächst nicht berührender Führungshülse 6 und gemeinsamer Welle 4 erzielt wird.

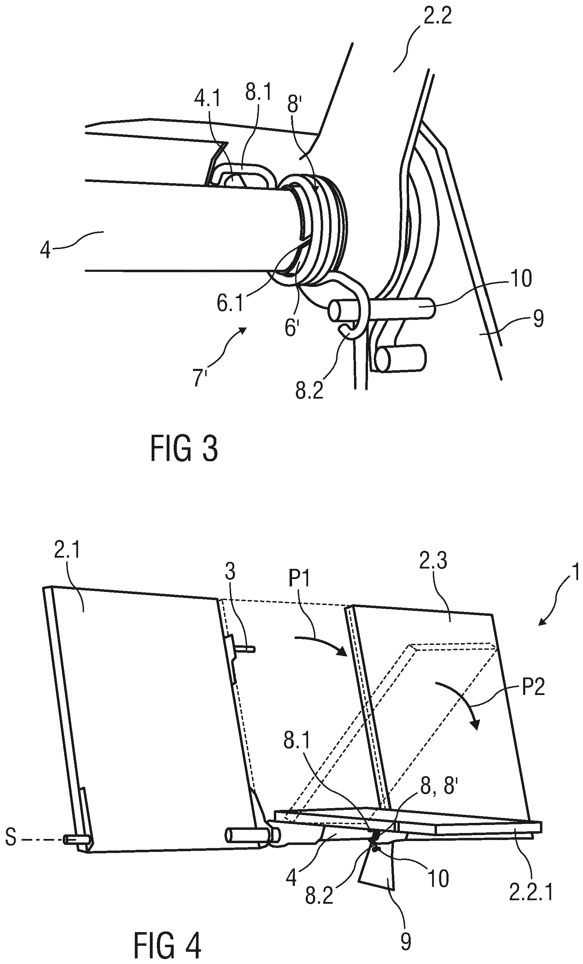

Figur 3 zeigt schematisch in vergrößerter Darstellung eine alternative Ausführungsform für eine Feder- und/oder Dämpfungseinrichtung 7' in einer Ausgangsstellung bei senkrechten Sitzlehnen der Sitze 2.1 bis 2.3 (wie in Figur 1 dargestellt).

Die Feder- und/oder Dämpfungseinrichtung 7' umfasst zumindest ein als Umschlingungsfeder oder Schraubdrehfeder ausgebildetes Federelement 8', welches nur auf einer Sitzseite des Sitzes 2.2 im Bereich der Lagerung der gemeinsamen Welle 4 der Sitze 2.1, 2.2 angeordnet ist. Das Federelement 8' ist wesentlich kürzer als das Federelement 8 nach Figuren 1 und 2 und ist auf einer im Bereich der Lagerung auf der gemeinsamen Welle 4 angeordneten kurzen Führungshülse 6' (oder Reibklemme), diese umschlingend, angeordnet. Das lehnenseitige Federende 8.1 ist in der Sitz-oder Normal-/Designposition der Sitzlehne des Sitzes 2.2 an einem wellenfesten Mitnahmepin 4.1 angelenkt.

Zur Einstellung der zu erzielenden Reibungskraft, die einer Schwenkbewegung des benachbarten Sitzes 2.1 entgegen wirken soll, ist zwischen Welle 4 und Federelement 8' die Führungshülse 6' angeordnet, die mit einem Schlitz 6.1 versehen ist.

Das sitzteilseitige Federende 8.2 ist sitzteilfest oder bodenfest am Bodenflansch 9 an einem Haltepin 10 angelenkt.

Figur 4 zeigt schematisch in perspektivischer Darstellung die Sitzanordnung 1 mit einer vollständig abgeklappten Sitzlehne (= Vollliniendarstellung) des mittleren Sitzes 2.2 aus einer senkrechten Position über eine Zwischenstellung (= gestrichelte Liniendarstellung) gemäß einer Schwenkbewegung nach den Pfeilen P1 und P2.

Wie in Figur 5 gezeigt, erfolgt beim Schwenken der Sitzlehne und somit des Sitzlehnenträgers 2.2.1 gemäß Pfeilen P1 und P2 von der senkrechten Position (= Sitz- oder Designposition) in die Zwischenstellung ein Vorspannen des Federelements 8' durch Mitnahme des lehnenseitigen Federendes 8.1 mittels eines lehnenfesten Mitnahmepins 11.

Je nach Anordnung des lehnenfesten Mitnahmepins 11 kann dieser über die gesamte Schwenkbewegung das lehnenseitige Federende 8.1 mitnehmen und somit das Federelement 8' spannen. Alternativ kann der lehnenfeste Mitnahmepin 11 zunächst bis zu einer vorgegebenen Neigung des Sitzlehnenträgers 2.2.1 gemäß Pfeil P1 einen Leerweg ausüben und erst bei Erreichen einer Zwischenstellung in Anlage an das lehnenseitige Federende 8.1 kommen und dieses mitnehmen und somit das Federelement 8' zumindest vorspannen.

Wie anhand des Vergleichs von Figur 3 und Figur 5 gezeigt, wird mit Schwenken des Sitzlehnenträgers 2.2.1 und Mitnahme des lehnenseitigen Federendes 8.1 und somit Spannen des Federelements 8' die Führungshülse 6' geklemmt und an die Welle 4 gedrückt, so dass der Schlitz 6.1 der Führungshülse 6' teilweise geschlossen (beispielsweise bei Mitnahme während der Schwenkbewegung gemäß Pfeil P2) oder weitgehend vollständig geschlossen (beispielsweise bei Mitnahme während der vollständigen Schwenkbewegung gemäß Pfeil P1 und P2) wird.

Der Schlitz 6.1 der Führungshülse 6' oder Reibklemme kann alternativ derart ausgebildet und ausgelegt sein, dass dieser auch bei einer Mitnahme des lehnenseitigen Federendes 8.1 über die gesamte Schwenkbewegung des Sitzlehnenträgers 2.2.1 gemäß Pfeil P1 und P2 nicht geschlossen ist.

Zusätzlich ist ein hülsen- oder wellenfester Mitnahmepin 4.1 in der Ausgangsstellung gezeigt, in welcher das Federelement 8' nicht an diesem angelenkt ist.

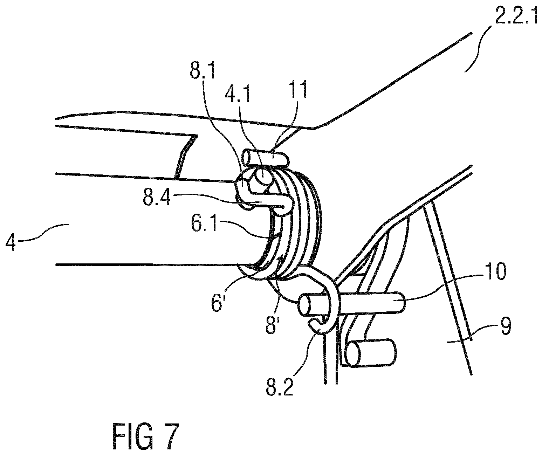

Hierzu ist das lehnenseitige Federende 8.1 entsprechend gebogen ausgeführt, wobei ein erster Bogen 8.3 dem Anlenken des lehnenfesten Mitnahmepins 11 dient und ein zweiter Bogen 8.4 dem Anlenken des wellenfesten Mitnahmepins 4.1 (wie in Figur 7 gezeigt) dient.

Figur 6 zeigt die Sitzanordnung 1 mit abgeklappten Sitzlehnen zweier benachbarter Sitze 2.1 und 2.2.

Wie oben beschrieben, wird zunächst der Sitzlehnenträger 2.2.1 des mittleren Sitzes 2.2 geklappt, wodurch das Federelement 8' durch Mitnahme des lehnenseitigen Federendes 8.1 mittels des lehnenfesten Mitnahmepins 11 zumindest teilweise oder vollständig vorgespannt wird.

Nach Entriegelung, insbesondere Fernentriegelung, des Sitzlehnenträgers 2.1.1 des benachbarten Sitzes 2.1, der drehfest auf der Welle 4 angeordnet ist, ist der Sitzlehnenträger 2.1.1 gegenüber dem Sitz 2.2 durch das vorgespannte Federelement 8' angefedert, so dass eine nachfolgende Schwenkbewegung des Sitzlehnenträgers 2.1.1 gedämpft (bei teilweise vorgespanntem Federelement 8') oder vermieden (bei vollständig gespanntem Federelement 8') wird.

Beim Schwenken des entriegelten Sitzlehnenträgers 2.1.1 wird durch Drehen der Welle 4 der wellenfeste Mitnahmepin 4.1 gedreht. Dabei kommt der wellenfeste Mitnahmepin 4.1 nach einem vorgegebenen Leerweg und somit nach einem Schwenken des Sitzlehnenträgers 2.1.1 bis zu einem vorgegebenen Neigungswinkel in Anlage an das lehnenseitige Federende 8.1 am Bogen 8.4 und nimmt das lehnenseitige Federende 8.1 bei weiterer Schwenkbewegung nach vorne mit, wodurch das Federelement 8' weiter gespannt wird und somit dieser Schwenkbewegung eine höhere Reibungskraft entgegenwirkt und diese weiter gedämpft oder gar vermieden wird.

Figur 7 zeigt die Anlage des wellenfesten Mitnahmepins 4.1 am Bogen 8.4. Der Schlitz 6.1 der Führungshülse 6' ist je nach Vorgabe, insbesondere spätestens bei vollständig abgeklapptem Sitzlehnenträger 2.1.1, geschlossen.

### Bezugszeichenliste

- 1: Sitzanordnung
- 2.1 bis 2.3: Sitze
- 2.1.1 bis 2.3.1: Sitzlehnenträger
- 3: Verriegelungselement
- 4: Welle
- 4.1: wellenfester Mitnahmepin
- 5: Drehbolzen
- 6, 6': Führungshülse
- 6.1: Schlitz
- 7, 7': Feder- und/oder Dämpfungseinrichtung
- 8, 8': Federelement
- 8.1: lehnenseitiges Federende
- 8.2: sitzteilseitiges Federende
- 8.3, 8.4: Bogen
- 9: Bodenflansch
- 10: Haltepin
- 11: lehnenfester Mitnahmepin

- S: Schwenkachse
- P1, P2: Pfeile

## Patentansprüche

1. Sitzanordnung (1) für ein Fahrzeug, die mehrere nebeneinander angeordnete Sitze (2.1 bis 2.3), von denen zumindest zwei um eine gemeinsame Schwenkachse (S) unabhängig schwenkbar sind, umfasst, wobei zumindest einer der zumindest zwei auf der gemeinsamen Schwenkachse (S) schwenkbaren Sitze (2.2) derart eingerichtet ist, dass bei Entriegelung und bei einem Schwenken der Sitzlehne des schwenkbaren Sitzes (2.2) aus einer Normal- oder Sitzposition über einen vorgegebenen Neigungswinkel heraus in eine nach vorne geschwenkte Stellung der benachbarte andere Sitz (2.1) im entriegelten Zustand gesperrt ist oder zumindest ein Klappen der Sitzlehne des anderen Sitzes (2.1) gedämpft oder gesperrt wird, **dadurch gekennzeichnet, dass** im Bereich der gemeinsamen Schwenkachse (S) des zu schwenkenden Sitzes (2.2) eine Feder-und/oder Dämpfungseinrichtung (7, 7') angeordnet ist, die bei einem Schwenken des zuerst schwenkenden Sitzes (2.2) eine zwischen dem schwenkenden Sitz (2.2) und dem benachbarten Sitz (2.1) wirkende Reibungskraft erhöht.

2. Sitzanordnung (1) nach Anspruch 1,
**dadurch gekennzeichnet, dass** der eine geringere Breite aufweisende Sitz (2.2) der zumindest beiden schwenkbaren Sitze (2.1 bis 2.3) derart eingerichtet ist, dass bei Entriegelung und bei einem Schwenken dessen Sitzlehne über einen vorgegebenen Neigungswinkel hinaus der benachbarte andere Sitz (2.1) mit einer größeren Breite im entriegelten Zustand gesperrt ist oder zumindest ein Klappen dessen Sitzlehne gedämpft oder gesperrt wird.

3. Sitzanordnung (1) nach Anspruch 1 oder 2,
**dadurch gekennzeichnet, dass** der benachbarte andere Sitz (2.1) im ungeklappten Zustand bei Entriegelung gegen den geschwenkten Sitz (2.2) angefedert ist.

4. Sitzanordnung (1) nach einem der vorhergehenden Ansprüche,
**dadurch gekennzeichnet, dass** die Feder- und/oder Dämpfungseinrichtung (7') als Federelement (8, 8') zumindest eine Umschlingungsfeder umfasst.

5. Sitzanordnung (1) nach einem der vorhergehenden Ansprüche 1 bis 3,
**dadurch gekennzeichnet, dass** die Feder- und/oder Dämpfungseinrichtung (7, 7') als Federelement (8, 8') zumindest eine Schraubendrehfeder umfasst.

6. Sitzanordnung (1) nach einem der vorhergehenden Ansprüche,
**dadurch gekennzeichnet, dass** die Feder- und/oder Dämpfungseinrichtung (7, 7') als Dämpfungselement zumindest eine Führungshülse (6, 6') oder Reibklemme umfasst.

7. Sitzanordnung (1) nach Anspruch 6,
**dadurch gekennzeichnet, dass** die Führungshülse (6, 6') oder die Reibklemme geschlitzt ist.

8. Sitzanordnung (1) nach Anspruch 6 oder 7,
**dadurch gekennzeichnet, dass** das Federelement (8, 8') die Führungshülse (6, 6') oder Reibklemme umgibt, insbesondere umschlingt.

9. Sitzanordnung (1) nach einem der vorhergehenden Ansprüche,
**dadurch gekennzeichnet, dass** das Federelement (8, 8') am zu schwenkenden Sitz (2.2) mit einem Federende (8.1) lehnenseitig und mit dem anderen Federende (8.2) sitzteilseitig angelenkt ist.

10. Sitzanordnung (1) nach einem der Ansprüche 5 bis 9, wobei das Federelement (8, 8') an einem Ende drehfest am Sitzteil angeordnet ist und am anderen Ende an einer Sitzlehne des zuerst schwenkenden Sitzes (2.2) abgestützt ist, wobei bei einer Schwenkbewegung der Sitzlehne das abgestützte Ende mitgenommen und das Federelement (8, 8') gespannt wird.

11. Sitzanordnung (1) nach Anspruch 10, wobei durch das gespannte Federelement (8, 8') beim nachfolgenden Schwenken der Sitzlehne des benachbarten anderen Sitzes (2.1) dieser Schwenkbewegung die Reibungskraft entgegenwirkt.

## Claims

1. Seat system (1) for a vehicle, the system comprising a plurality of seats (2.1 to 2.3) which are arranged one beside the other and of which at least two are independently pivotable about a common pivot axis (S), wherein at least one of the at least two seats (2.2) pivotable on the common pivot axis (S) is configured such that, in the event of unlocking and the backrest of the pivotable seat (2.2) being pivoted out of a normal position or sitting position into a forwardly inclined position beyond a predetermined angle of inclination, the other, adjacent seat (2.1) is blocked in the unlocked state or at least a folding action of the backrest of the other seat (2.1) is damped or blocked,
**characterized in that** a spring device and/or damping device (7, 7') is arranged in the region of the common pivot axis (S) of the seat (2.2) which is to be pivoted, which device increases a frictional force acting between the pivoting seat (2.2) and the adjacent seat (2.1) as the seat (2.2) which is the first to pivot pivots.

2. Seat system (1) according to Claim 1,
**characterized in that** the smaller-width seat (2.2) of the at least two pivotable seats (2.1 to 2.3) is configured such that, in the event of unlocking and the backrest thereof being pivoted beyond a predetermined angle of inclination, the other, adjacent seat (2.1), which is of greater width, is blocked in the unlocked state or at least a folding action of the backrest thereof is damped or blocked.

3. Seat system (1) according to Claim 1 or 2,
**characterized in that** the other, adjacent seat (2.1) in the non-folded state, in the event of unlocking, is spring-loaded in relation to the pivoted seat (2.2).

4. Seat system (1) according to one of the preceding claims,
**characterized in that** the spring device and/or damping device (7') comprises, as its spring element (8, 8'), at least one wrap spring.

5. Seat system (1) according to one of the preceding Claims 1 to 3,
**characterized in that** the spring device and/or damping device (7, 7') comprises, as its spring element (8, 8'), at least one helical torsion spring.

6. Seat system (1) according to one of the preceding claims,
**characterized in that** the spring device and/or damping device (7, 7') comprises, as its damping element, at least one guide sleeve (6, 6') or friction clamp.

7. Seat system (1) according to Claim 6,
**characterized in that** the guide sleeve (6, 6') or the friction clamp is slit.

8. Seat system (1) according to Claim 6 or 7,
**characterized in that** the spring element (8, 8') encloses, in particular wraps around, the guide sleeve (6, 6') or friction clamp.

9. Seat system (1) according to one of the preceding claims,
**characterized in that** the spring element (8, 8') has its one spring end (8.1) articulated on the backrest of the seat (2.2) which is to be pivoted and has its other spring end (8.2) articulated on the seat part of said seat.

10. Seat system (1) according to one of Claims 5 to 9, wherein, at one end, the spring element (8, 8') is arranged in a rotationally fixed manner on the seat part and, at the other end, the spring element is supported on a backrest of the seat (2.2) which is the first to pivot, wherein, in the event of a pivoting movement of the backrest, the supported end is carried along and the spring element (8, 8') is stressed.

11. Seat system (1) according to Claim 10, wherein, in the event of the backrest of the adjacent other seat (2.1) being subsequently pivoted, owing to the stressed spring element (8, 8'), the frictional force counteracts this pivoting movement.

## Revendications

1. Ensemble de sièges (1), destiné à un véhicule, comprenant une pluralité de sièges juxtaposés (2.1 à 2.3) dont au moins deux peuvent pivoter indépendamment sur un axe de pivotement commun (S), l'un au moins des au moins deux sièges (2.2) qui pivote sur l'axe de pivotement commun (S) étant adapté de telle sorte que, lors du déverrouillage et lors du pivotement du dossier du siège pivotant (2.2) d'une position normale ou d'assise au-delà d'un angle d'inclinaison prédéterminé jusque dans une position inclinée vers l'avant, l'autre siège adjacent (2.1) soit bloqué à l'état déverrouillé ou au moins le rabattement du dossier de l'autre siège (2.1) soit amorti ou bloqué,
**caractérisé en ce que** dans la région de l'axe de pivotement commun (S) du siège pivotant (2.2) est disposé un mécanisme à ressort et/ou d'amortissement (7, 7') qui, lors du pivotement du siège (2.2) pivotant en premier, augmente la force de friction agissant entre le siège pivotant (2.2) et le siège adjacent (2.1).

2. Ensemble de sièges (1) selon la revendication 1, **caractérisé en ce que** le siège (2.2) des au moins deux sièges pivotants (2.1 à 2.3) qui a une plus petite largeur est conçu de telle sorte que, lors du déverrouillage et du pivotement de son dossier au-delà d'un angle d'inclinaison prédéterminé, l'autre siège adjacent (2.1) qui a une plus grande largeur soit bloqué à l'état déverrouillé ou au moins le rabattement de son dossier soit amorti ou bloqué.

3. Ensemble de sièges (1) selon la revendication 1 ou 2,
**caractérisé en ce que** l'autre siège adjacent (2.1) à l'état non rabattu est contraint par ressort lors du déverrouillage contre le siège pivoté (2.2).

4. Ensemble de sièges (1) selon l'une des revendications précédentes,
**caractérisé en ce que** le mécanisme à ressort et/ou d'amortissement (7') comporte comme élément à ressort (8, 8') au moins un ressort enroulé.

5. Ensemble de sièges (1) selon l'une des revendications précédentes 1 à 3,
**caractérisé en ce que** le mécanisme à ressort et/ou d'amortissement (7, 7') comporte comme élément à ressort (8, 8') au moins un ressort hélicoïdal.

6. Ensemble de sièges (1) selon l'une des revendications précédentes,
**caractérisé en ce que** le mécanisme à ressort et/ou d'amortissement (7, 7') comprend en tant qu'élément d'amortissement au moins un manchon de guidage (6, 6') ou une pince à friction.

7. Ensemble de sièges (1) selon la revendication 6, **caractérisé en ce que** le manchon de guidage (6, 6') ou la pince à friction est fendu(e).

8. Ensemble de sièges (1) selon la revendication 6 ou 7,
**caractérisé en ce que** l'élément à ressort (8, 8') entoure le manchon de guidage (6, 6') ou la pince à friction, notamment est enroulé autour de celui-ci ou de celle-ci.

9. Ensemble de sièges (1) selon l'une des revendications précédentes,
**caractérisé en ce que** l'élément à ressort (8, 8') au niveau du siège devant pivoter (2.2) est articulé avec une extrémité de ressort (8.1) côté dossier et avec l'autre extrémité de ressort (8.2) côté assise.

10. Ensemble de sièges (1) selon l'une des revendications 5 à 9, l'élément à ressort (8, 8') étant disposé à une extrémité solidairement en rotation avec l'assise et venant en appui à l'autre extrémité sur un dossier du siège (2.2) pivotant en premier, l'extrémité en appui étant entraînée et l'élément à ressort (8, 8') étant tendu lors d'un mouvement de pivotement du dossier.

11. Ensemble de sièges (1) selon la revendication 10, lors du pivotement ultérieur du dossier de l'autre siège adjacent (2.1), la force de frottement s'opposant à ce mouvement de pivotement par le biais de l'élément de ressort tendu (8, 8').
